# EUROPEAN PATENT APPLICATION

(11) **EP 4 765 404 A1**
(43) Date of publication of application: **24.06.2026**
(21) Application number: 24913549.2
(22) Date of filing: 03.12.2024
(51) Int. Cl.: H01M 50/264, H01M 50/211, H01M 50/213

(54) **BATTERY PACK**

(30) Priority: 27.12.2023 KR 20230193697
(71) Applicant: LG Energy Solution, Ltd., Seoul 07335 (KR)
(72) Inventor: CHOI, Sung Man, Daejeon 34122 (KR); KIM, Hee Gyu, Daejeon 34122 (KR); YANG, Kun Joo, Daejeon 34122 (KR); SON, Do Wung, Daejeon 34122 (KR)
(74) Representative: BCKIP Part mbB
(86) International application number: PCT/KR2024/019536
(87) International publication number: WO 2025/143606

(57) **Abstract**

The present disclosure relates to a battery pack, and the battery pack according to an aspect of the present disclosure includes a housing having an accommodation space, and a module assembly disposed in the accommodation space, wherein the module assembly includes a module array including a plurality of stacked battery modules, and a side frame including a plate portion disposed at a side of the module array and coupled to each of the plurality of battery modules and a support portion extended from the plate portion in an outward direction of the module array and supported by the housing.

## Description

### TECHNICAL FIELD

### CROSS-REFERENCE TO RELATED APPLICATIONS

The present application claims priority to Korean Patent Application No. 10-2023-0193697 filed on December 27, 2023 in the Republic of Korea, the disclosure of which is incorporated herein by reference.

### TECHNICAL FIELD

The present disclosure relates to a battery pack, and more particularly, to a battery pack capable of charging/discharging electrical energy.

### BACKGROUND ART

Secondary batteries have been used in the field of small-sized devices such as mobile devices or laptop computers, and recently, with the expansion of research to the field of medium- and large-sized devices, they are being widely used in high voltage and large capacity applications including Energy Storage Systems (ESSs) or Electric Vehicles (EVs).

A plurality of battery cells of secondary batteries may be connected and coupled in a predetermined way to form a battery module. Additionally, a plurality of battery modules may be put together and packaged in a housing to form a battery pack. Recently, to improve the energy density of the battery pack, many studies are being conducted on placement of the battery modules in the housing of the battery pack and structures for stably keeping the battery modules fixed in place inside the housing.

As one of methods for improving the energy density of the battery pack, a stack structure of the plurality of battery modules in the up-down direction may be suggested. However, when the battery modules are vertically stacked, the battery modules cannot be stably supported by the housing, resulting in low structural stability.

As an example, the battery modules placed at the lower position may be stably supported by the bottom of the housing, but the battery modules placed at the upper position cannot be stably supported and held fixed in place by the housing. This may cause a decrease in stability of the entire battery pack and vulnerability to external shocks or pollution.

Accordingly, there is an urgent need for development of the battery pack in which the battery modules vertically stacked are stably held fixed in place and supported inside the housing of the battery pack, thereby achieving improved energy density and structural stability at the same time.

### SUMMARY

### TECHNICAL PROBLEM

The present disclosure is designed to solve the above-described problems, and the present disclosure is directed to providing a battery pack with high structural stability and energy density.

The problems of the present disclosure are not limited to the aforementioned problems, and these and other problems will be clearly understood by persons having ordinary skill in the technical field pertaining to the present disclosure from the following description.

### TECHNICAL SOLUTION

According to an aspect of the present disclosure, there is provided a battery pack including a housing having an accommodation space, and a module assembly disposed in the accommodation space, wherein the module assembly includes a module array including a plurality of stacked battery modules, and a side frame including a plate portion disposed at a side of the module array and coupled to each of the plurality of battery modules and a support portion extended from the plate portion in an outward direction of the module array and supported by the housing.

In this instance, a side of the battery module may have a coupling groove recessed inwards, the plate portion may have a plurality of coupling holes, each coupling hole connected to each of the coupling grooves of the plurality of battery modules, and the module array and the side frame may be coupled by a coupler inserted into the coupling hole and the coupling groove.

In this instance, the coupling groove may include the plurality of coupling grooves arranged at an interval along a length direction of the battery module, and the plate portion may be extended along the length direction of the battery module.

In this instance, a width of the plate portion in an up-down direction may be smaller than a height of the module array.

In this instance, the support portion may include a plurality of support portions arranged at an interval along a length direction of the battery module.

In this instance, the support portion may have a coupling hole through which a predetermined coupler is coupled.

In this instance, the support portion may include an upper support portion at an upper edge of the plate portion, and a lower support portion at a lower edge of the side plate.

In this instance, the upper support portion and the lower support portion may be arranged in a staggered manner in an up-down direction.

In this instance, the battery pack may further include a center support frame configured to divide the accommodation space, a side of the center support frame being supported by an inner wall of the housing, and the support portion may be coupled to the center support frame.

In this instance, the center support frame may have a plate shape extended parallel to the plate portion, and the upper support portion may be coupled to an upper edge part of the center support frame.

In this instance, the center support frame may have a center escape space of which at least one side is open, and the lower support portion may be coupled to an inner wall of the center escape space.

In this instance, the battery pack may further include a side support frame extended along a periphery of the accommodation space, a side of the side support frame being supported by an inner wall of the housing, and the support portion may be coupled to the side support frame.

In this instance, the side support frame may have a plate shape extended parallel to the plate portion, and the upper support portion may be coupled to an upper edge part of the side support frame.

In this instance, a side of the side support frame may be connected or coupled to the inner wall of the housing.

In this instance, the side support frame may have a side escape space of which at least one side is open, and the lower support portion may be coupled to an inner wall of the side escape space.

In this instance, the side frame may include a pair of side frames, each side frame disposed at each of two opposite sides of the module array.

In this instance, the battery pack may further include a center support frame configured to divide the accommodation space, a side of the center support frame being supported by an inner wall of the housing, and a side support frame extended along a periphery of the accommodation space, a side of the side support frame being supported by the inner wall of the housing, and any one of the pair of side frames may be coupled to any one of the center support frame and the side support frame, and the other of the pair of side frames may be coupled to the other of the center support frame and the side support frame.

In this instance, the side support frame may include a pair of side support frames extended parallel to each other at two sides of the accommodation space, the center support frame may be extended between the pair of side support frames in parallel to the pair of side support frames to divide the accommodation space into a first accommodation space and a second accommodation space, and the module assembly may include a first module assembly disposed in the first accommodation space, and a second module assembly disposed in the second accommodation space.

### ADVANTAGEOUS EFFECTS

In the battery pack according to an aspect of the present disclosure, as the plate portion of the side frame is coupled to each of the plurality of battery modules vertically stacked, the battery modules may be held fixed in place relative to each other and supported each other through the medium of the side frame.

Additionally, as the support portion of the side frame is extended outward from the plate portion and supported by the housing of the battery pack, the stacked battery modules may be stably held fixed in place and supported by the housing through the medium of the side frame.

Through this, the battery pack according to an aspect of the present disclosure may have high energy density because of the plurality of battery modules vertically stacked, and high structural stability because of the stacked battery modules stably supported by the housing through the medium of the side frame.

The effects of the present disclosure are not limited to the aforementioned effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a perspective view of a battery pack according to an embodiment of the present disclosure.
FIG. 2 is an exploded perspective view of a battery pack according to an embodiment of the present disclosure.
FIG. 3 is a perspective view of a housing, a side support frame and a center support frame of a battery pack according to an embodiment of the present disclosure.
FIG. 4 is a perspective view of a module assembly of a battery pack according to an embodiment of the present disclosure.
FIG. 5 is an exploded perspective view of a module assembly of a battery pack according to an embodiment of the present disclosure.
FIG. 6 is a vertical cross-sectional view of a module assembly of a battery pack according to an embodiment of the present disclosure.
FIG. 7 is a partial enlarged view of FIG. 6.
FIG. 8 is a vertical cross-sectional view of a battery pack according to an embodiment of the present disclosure, showing a coupled structure of a lower support portion of a side frame and a support frame.
FIG. 9 is a partial enlarged view of FIG. 8, showing a coupled structure of a lower support portion of a side frame and a center support frame.
FIG. 10 is a partial enlarged view of FIG. 8, showing a coupled structure of a lower support portion of a side frame and a side support frame.
FIG. 11 is a vertical cross-sectional view of a battery pack according to an embodiment of the present disclosure, showing a coupled structure of an upper support portion of a side frame and a support frame.
FIG. 12 is a partial enlarged view of FIG. 11, showing a coupled structure of an upper support portion of a side frame and a center support frame.
FIG. 13 is a partial enlarged view of FIG. 11, showing a coupled structure of an upper support portion of a side frame and a side support frame.

### DETAILED DESCRIPTION

The exemplary embodiments of the present disclosure will be described in sufficient detail to enable those skilled in the art to easily carry out the present disclosure. However, the present disclosure may be embodied in many different forms and is not restricted or limited to the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

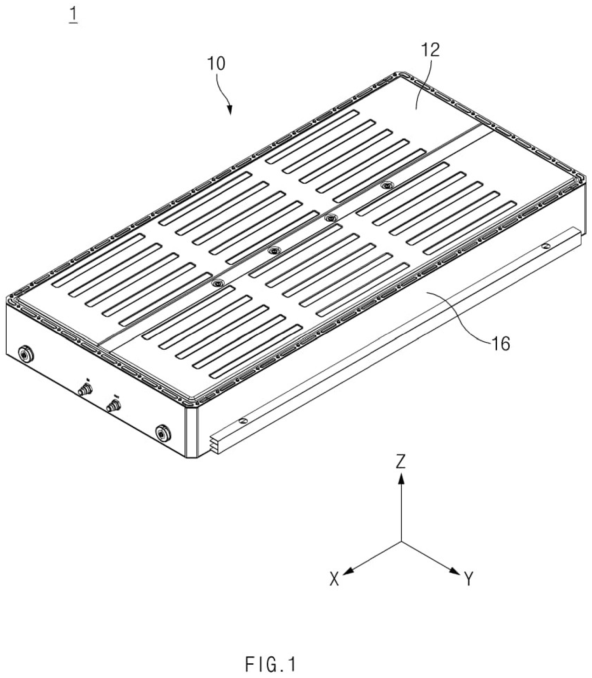

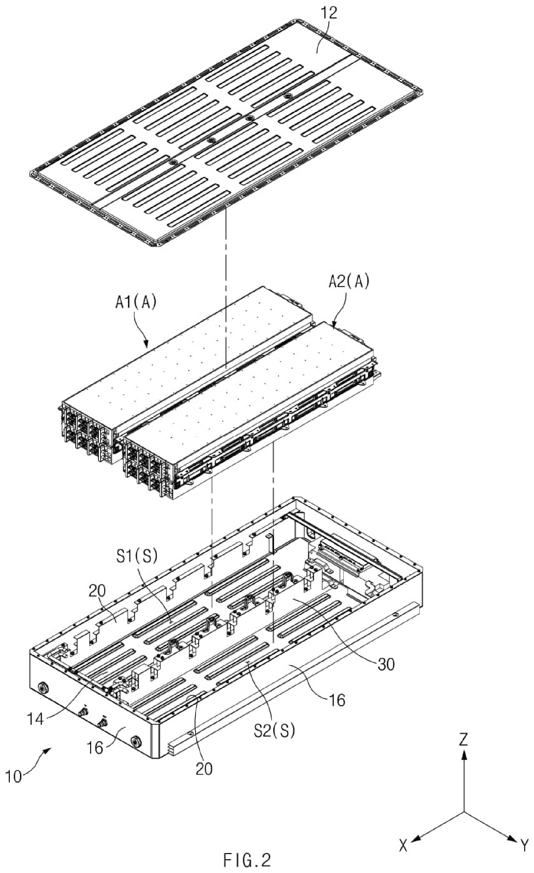

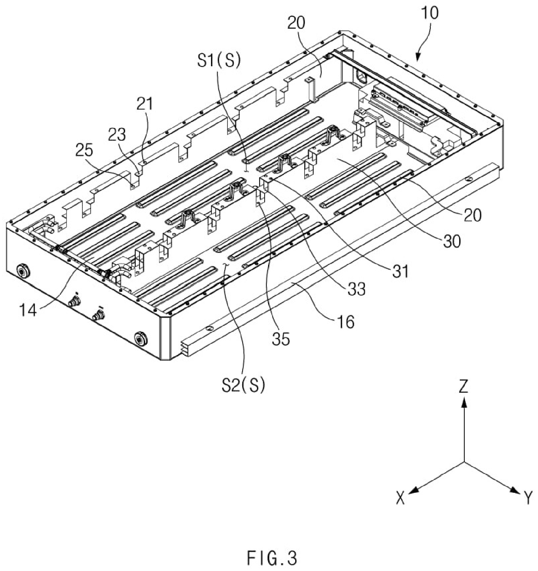

FIG. 1 is a perspective view of a battery pack according to an embodiment of the present disclosure. FIG. 2 is an exploded perspective view of the battery pack according to an embodiment of the present disclosure. FIG. 3 is a perspective view of a housing, a side support frame and a center support frame of the battery pack according to an embodiment of the present disclosure.

FIGS. 1 and 2 show the battery pack 1 according to an embodiment of the present disclosure. Referring to FIGS. 1 and 2, the battery pack 1 according to an embodiment of the present disclosure is a device for charging or storing electrical energy or discharging the stored electrical energy. As a non-limiting example, the battery pack 1 may be mounted in a vehicle body of an electric vehicle to store and supply electrical energy for driving a motor.

In this embodiment, the battery pack 1 may include the housing 10. The housing 10 may be used to accommodate the other components of the battery pack 1 to protect them from external shocks or pollution. To this end, the housing 10 may be made of metal or reinforced plastic having a predetermined stiffness, but the material of the housing 10 is not limited thereto.

Referring to FIGS. 1 and 2, the housing 10 of the battery pack 1 according to this embodiment may include an upper plate 12, a lower plate 14 and a side plate 16. In this embodiment, each of the upper plate 12 and the lower plate 14 may be a plate of a rectangular shape.

Additionally, the upper plate 12 and the lower plate 14 may be arranged apart from each other in the up-down direction. Accordingly, an accommodation space S may be present between the upper plate 12 and the lower plate 14. In this embodiment, the side plate 16 may surround the accommodation space S between the upper plate 12 and the lower plate 14.

Accordingly, the upper surface, the lower surface and the sides of the accommodation space S may be covered by the upper plate 12, the lower plate 14 and the side plate 16, respectively. Meanwhile, the side plate 16 may be formed by coupling the plurality of plates. Alternatively, the plurality of plates may be connected into one.

In this embodiment, although the housing 10 is provided as a structure of a box shape, the housing 10 is not limited to a particular shape and may have any shape for accommodating the other components to protect them. For example, at least part of the housing 10 may have a bent or curved surface.

Referring to FIGS. 2 and 3, the battery pack 1 according to an embodiment of the present disclosure may include support frames 20, 30. The support frames 20, 30 may be a frame for supporting a module assembly A as described below and fixing its position in the housing 10. To this end, the support frames 20, 30 may be made of metal or reinforced plastic having a predetermined stiffness, but is not limited thereto.

In this embodiment, the support frames 20, 30 may include the side support frame 20. The side support frame 20 may be a frame for supporting the module assembly A using the support force of the lower plate 14 and/or the side plate 16 of the housing 10.

In this embodiment, the side support frame 20 may have a plate shape extended in the front-rear direction (X axis direction) along the periphery of the accommodation space S. In this instance, one side of the side support frame 20 may be connected or coupled to the side plate 16 of the housing 10. Additionally, the lower edge part of the side support frame 20 may be connected or coupled to the lower plate 14. Through this, the side support frame 20 may support the module assembly A based on the support force of the housing 10.

In this instance, in this embodiment, the said side of the side support frame 20 may be a side facing the outer side of the accommodation space S. In other words, the said side may be a side facing the inner wall of the side plate 16.

Additionally, the said side of the side support frame 20 may be connected or coupled in contact with the side plate 16 by a plurality of ribs as shown. Through this, the side support frame 20 may have strong stiffness and reduce in weight. The side support frame 20 may be connected or coupled in contact with the inner wall of the side plate 16.

In this embodiment, an upper support portion 54 of the module assembly A as described below may be supported in contact with the upper edge part of the side support frame 20. In this instance, the upper edge part of the side support frame 20 may be bent outward from the accommodation space S such that the outer surface may face upwards.

Additionally, in this embodiment, the bent part of the upper edge part of the side support frame 20 may be coupled or connected to the side plate 16. Accordingly, the upper support portion 54 may be supported in planar contact with the upper edge part of the side support frame 20 more stably.

Meanwhile, in this embodiment, the upper edge part of the side support frame 20 may have a coupling hole 21. The coupling hole 21 may be used to couple the upper support portion 54 of the module assembly A to the side support frame 20. It will be described in detail below together with the module assembly A.

In this instance, the coupling hole 21 may include a plurality of coupling holes 21 corresponding to the number of upper support portions 54. Additionally, the plurality of coupling holes 21 may be arranged at an interval along the extension direction (X axis direction) of the side support frame 20.

Meanwhile, in this embodiment, the side support frame 20 may have a side escape space 23 at the inner side. The side escape space 23 may be a space into which a lower support portion 56 of the module assembly A as described below is inserted. Additionally, the lower support portion 56 may be supported in contact with the inner wall of the side escape space 23.

To this end, at least one side of the side escape space 23 may be open. In this embodiment, a side of the side escape space 23 facing the accommodation space S may be open. The lower support portion 56 may be disposed in the side escape space 23 through the open side of the side escape space 23.

The length (X axis direction length) and width (Y axis direction width) of the side escape space 23 may be properly modified according to the shape of the lower support portion 56 of the module assembly A as described below.

In this instance, in this embodiment, the upper side of the side escape space 23 may be open. The open upper part may be used in the assembly process of the side support frame 20 and the module assembly A.

For example, in the assembly process of the side support frame 20 and the module assembly A, the lower support portion 56 may move down through the open upper side of the side escape space 23 and be placed in contact with the bottom side of the side escape space 23. Accordingly, the lower support portion 56 and the side support frame 20 may be assembled together.

In this instance, in this embodiment, the bottom side of the side escape space 23 may have a predetermined coupling hole 25. The coupling hole 25 may be used to couple the lower support portion 56 of the module assembly A to the side support frame 20.

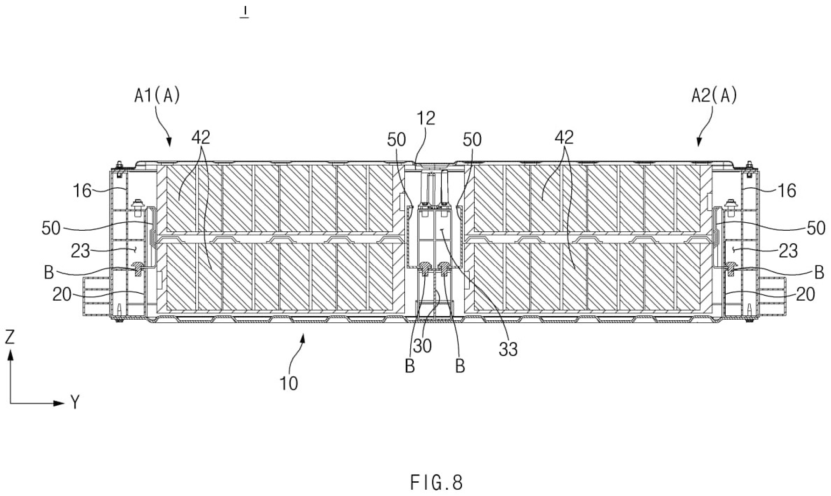

The coupling hole 25 may be formed at the side part of the inner wall of the side escape space 23, taking into account the shape of the lower support portion 56. The coupled structure of the side support frame 20 and the module assembly A will be described in detail below in conjunction with FIGS. 8 to 13.

Meanwhile, in this embodiment, the side escape space 23 may include a plurality of side escape spaces 23 corresponding to the number of lower support portions 56. Additionally, the plurality of side escape spaces 23 may be arranged at an interval along the extension direction (X axis direction) of the side support frame 20.

In this instance, the plurality of side escape spaces 23 may be arranged in a staggered manner with the plurality of coupling holes 21 in the up-down direction (Z axis direction). As an example, parts of the plurality of side escape spaces 23 may be located between the plurality of coupling holes 21.

The coupling holes 21, 25 may be disposed corresponding to the placement of the upper support portion 54 and the lower support portion 56, to improve the assembly efficiency of the side support frame 20 and the module assembly A.

Referring back to FIG. 3, in this embodiment, the side support frame 20 may include a plurality of side support frames 20, and each of the side support frames 20 may be disposed at the periphery of the accommodation space S. As an example, as shown, the side support frame 20 may include a pair of side support frames 20.

Additionally, each of the pair of side support frames 20 may be disposed on each of two sides of the accommodation space S in the width direction (Y axis direction) and extended parallel to each other in the length direction (X axis direction) of the accommodation space S.

Meanwhile, referring to FIG. 3, in this embodiment, the support frames 20, 30 may include the center support frame 30. The center support frame 30 may be a frame placed between the adjacent module assemblies A to support them.

In this embodiment, the center support frame 30 may have a plate shape extended in a direction (X axis direction) parallel to the pair of side support frames 20 between the pair of side support frames 20.

Accordingly, the accommodation space S may be divided into a first accommodation space S1 and a second accommodation space S2 by the center support frame 30. Hereinafter, the accommodation space located at the left side of the center support frame 30 (the negative direction of the Y axis) is referred to as the first accommodation space S1, and the accommodation space located at the right side (the positive direction of the Y axis) is referred to as the second accommodation space S2.

In this instance, in this embodiment, the center support frame 30 may be formed with a plate shape as a whole. More specifically, as shown, the center support frame 30 may be provided in such a way that plates having a relatively small thickness are overlapped, and the overlapped plates are connected or coupled to each other by a plurality of ribs. Through this, the center support frame 30 may have strong stiffness, and reduce in weight.

In this embodiment, the lower edge part of the center support frame 30 may be connected or coupled to the lower plate 14 of the housing 10. Accordingly, the center support frame 30 may support the module assembly A by use of the support force of the housing 10.

Additionally, in this embodiment, the upper support portion 54 of the module assembly A as described below may be supported in contact with the upper edge part of the center support frame 30. In this instance, the upper edge part of the center support frame 30 may have a predetermined outer surface in the thickness direction (X axis direction). The outer surface may be formed facing upwards. Through this, the upper support portion 54 may be supported in planar contact with the upper edge part of the center support frame 30 more stably.

Meanwhile, in this embodiment, the upper edge part of the center support frame 30 may have a predetermined coupling hole 31. The coupling hole 31 may be used to couple the upper support portion 54 of the module assembly A to the center support frame 30.

In this instance, the coupling hole 31 may include a pair of coupling holes 31 arranged at an interval in the thickness direction (Y axis direction) of the center support frame 30. Among the pair of coupling holes 31, the coupling hole 31 located at the left side (the negative direction of the Y axis) may be the component to which the upper support portion 54 of the module assembly A located in the first accommodation space S1 is coupled, and the coupling hole 31 located at the right side (the positive direction of the Y axis) may be the component to which the upper support portion 54 of the module assembly A located in the second accommodation space S2 is coupled. It will be described in detail below in conjunction with FIGS. 8 to 13.

Additionally, in this embodiment, the pair of coupling holes 31 may include a plurality of pairs of coupling holes 31 corresponding to the number of upper support portions 54. The plurality of pairs of coupling holes 31 may be arranged at an interval along the extension direction (X axis direction) of the center support frame 30.

Meanwhile, in this embodiment, the center support frame 30 may have a center escape space 33 at the inner side. The center escape space 33 may be a space into which the lower support portion 56 of the module assembly A as described below is inserted. Additionally, the lower support portion 56 may be supported in contact with the inner wall of the center escape space 33.

To this end, at least one side of the center escape space 33 may be open. In this embodiment, one side of the center escape space 33 facing the first accommodation space S1 and the other side facing the second accommodation space S2 may be open. As shown, one side and the other side of the center escape space 33 may be two sides of the center support frame 30 in the thickness direction (Y axis direction).

As described in detail below, the lower support portion 56 of the module assembly A disposed in the first accommodation space S1 may be disposed in the center escape space 33 through one open side of the center escape space 33, and the lower support portion 56 of the module assembly A disposed in the second accommodation space S2 may be disposed in the center escape space 33 through the other open side of the center escape space 33.

The length (X axis direction length) and width (Y axis direction width) of the center escape space 33 may be properly modified, taking into account the shape of the lower support portion 56 of the module assembly A as described below.

In this instance, in this embodiment, the upper side of the center escape space 33 may be open. The open upper part may be used in the assembly process of the center support frame 30 and the module assembly A.

For example, in the assembly process of the center support frame 30 and the module assembly A, the lower support portion 56 may move down through the open upper side of the center escape space 33 and be placed in contact with the bottom side of the center escape space 33. Accordingly, the lower support portion 56 may be supported by the center support frame 30.

Meanwhile, in this embodiment, the bottom side of the center escape space 33 may have a predetermined coupling hole 35. The coupling hole 35 may be used to couple the lower support portion 56 of the module assembly A to the center support frame 30.

In this instance, the coupling hole 35 may include a pair of coupling holes 35 arranged at an interval in the thickness direction (Y axis direction) of the center support frame 30. Among the pair of coupling holes 35, the coupling hole 31 located at the left side (the negative direction of the Y axis) may be the component to which the lower support portion 56 of the module assembly A located in the first accommodation space S1 is coupled, and the coupling hole 35 located at the right side (the positive direction of the Y axis) may be the component to which the lower support portion 56 of the module assembly A located in the second accommodation space S2 is coupled.

The coupling hole 35 may be formed at the side of the inner wall of the center escape space 33, taking into account the shape of the lower support portion 56. It will be described in detail below together with the module assembly A.

Meanwhile, in this embodiment, the center escape space 33 may include a plurality of center escape spaces 33 corresponding to the number of lower support portions 56. Additionally, the plurality of center escape spaces 33 may be arranged at an interval along the extension direction (X axis direction) of the center support frame 30.

In this instance, the plurality of center escape spaces 33 may be arranged in a staggered manner with the plurality of coupling holes 31 in the up-down direction (Z axis direction). As an example, parts of the plurality of center escape spaces 33 may be located between the plurality of coupling holes 31.

The coupling holes 31, 35 may be located corresponding to the placement of the upper support portion 54 and the lower support portion 56, to improve the assembly efficiency of the center support frame 30 and the module assembly A.

Hereinafter, the module assembly of the battery pack according to an embodiment of the present disclosure will be described in more detail.

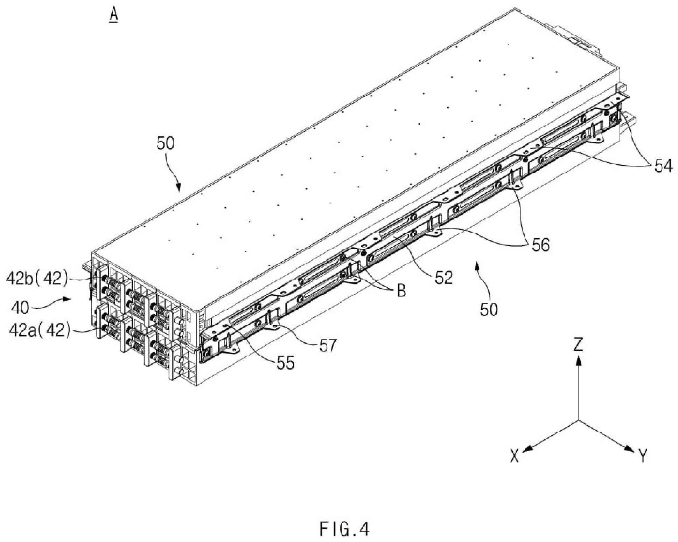

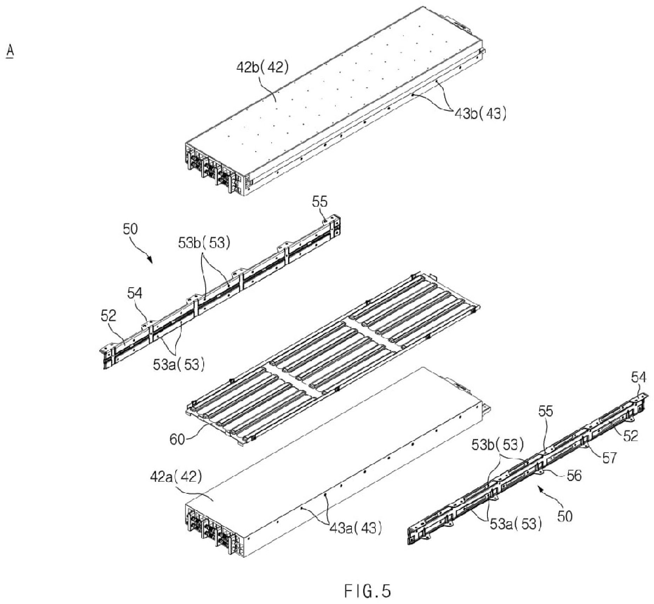

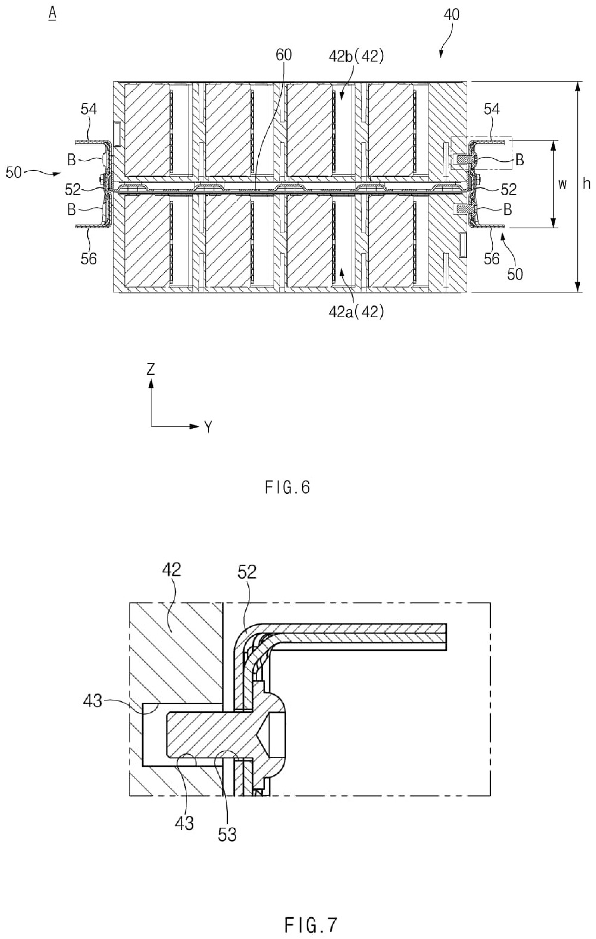

FIG. 4 is a perspective view of the module assembly of the battery pack according to an embodiment of the present disclosure. FIG. 5 is an exploded perspective view of the module assembly of the battery pack according to an embodiment of the present disclosure. FIG. 6 is a vertical cross-sectional view of the module assembly of the battery pack according to an embodiment of the present disclosure. FIG. 7 is a partial enlarged view of FIG. 6.

FIGS. 4 to 7 show the module assembly A of the battery pack 1 according to an embodiment of the present disclosure. Referring to FIGS. 4 to 6, in this embodiment, the module assembly A may include a module array 40. The module array 40 may include a plurality of battery modules 42.

In this embodiment, the battery module 42 may be a module in which at least one battery cell is integrated and packaged by a predetermined frame or housing. In this instance, the battery cell may include a pouch-type secondary battery or a cylindrical secondary battery, but is not limited thereto.

The battery module 42 may be charged when it is electrically connected to an external power source, or may discharge electrical energy when it is connected to an external load. In other words, the battery module 42 may perform the charge/discharge function in the battery pack 1.

In this embodiment, the battery module 42 may have a hexahedron shape extended in the front-rear direction (X axis direction) as a whole. Additionally, the side of the battery module 42 may have a coupling groove 43. The coupling groove 43 may be used to couple a side frame 50 as described below.

The coupling groove 43 may be recessed inwards from the battery module 42. The coupling groove 43 may have a screw thread along the inner periphery according to needs. To this end, the coupling groove 43 may be formed by insert injection molding of a nut in the housing or frame that constitutes the battery module 42, but is not limited thereto.

In this embodiment, in addition to the function of coupling the side frame 50, the coupling groove 43 of the battery module 42 may perform the other additional function. As an example, the coupling groove 43 may be used to move the battery module 42 in the process of manufacturing the battery pack 1.

More specifically, a stopper (a hook) of a device or tool for movement may be inserted into the coupling groove 43 of the battery module 42. Through this, it may be possible to reduce the amount of manpower required for the movement of the battery module 42, and increase the positioning accuracy of the battery module 42.

Meanwhile, the coupling groove 43 may be formed at the two opposite sides of the battery module 42 to couple each of the pair of side frames 50 to each of the two side parts of the battery module 42.

Additionally, the coupling groove 43 may include a plurality of coupling grooves 43 arranged at an interval along the length direction (X axis direction) of the battery module 42, to increase the coupled part of the battery module 42 and the side frame 50, thereby increasing the coupling strength between them.

Although the battery module 42 having the hexahedron shape extended frontwards/rearwards is shown in this embodiment, the shape of the battery module 42 may be properly modified, taking into account the characteristics of the battery cell or the shape of the accommodation space S.

Referring back to FIGS. 4 and 5, in this embodiment, the module array 40 may include two battery modules 42 vertically stacked. Hereinafter, the battery module 42 located at the upper position is referred to as an upper battery module 42b, and the battery module 42 located at the lower position is referred to as a lower battery module 42a. The module array 40 may include three or more stacked battery modules 42 according to needs.

In this instance, the coupling grooves 43b of the upper battery module 42b may be located at the lower part, and the coupling grooves 43a of the lower battery module 42a may be located at the upper part. This may make a plate portion 52 of the side frame 50 have as a small width (w) as possible. It will be described in detail below together with the side frame 50.

Referring to FIGS. 4 to 6, the module assembly A of the battery pack 1 according to an embodiment of the present disclosure may include the side frame 50. The side frame 50 may be a frame disposed on the side of the module array 40 to support it. To this end, the side frame 50 may be made of metal or reinforced plastic having a predetermined stiffness, but is not limited thereto.

In this embodiment, the side frame 50 may include the plate portion 52. The plate portion 52 may have a plate shape placed on the side of the module array 40. In other words, the plate portion 52 may have the predetermined width (w) in the up-down direction (Z axis direction). Additionally, the plate portion 52 may be extended along the length direction (X axis direction) of the module array 40.

In this embodiment, the plate portion 52 may be coupled to each of the battery modules 42 of the module array 40. To this end, at least part of the plate portion 52 may overlap the side of each of the battery modules 42.

As shown in FIGS. 5 to 7, the upper part of the plate portion 52 may overlap the side of the upper battery module 42b, and the lower part may overlap the side of the lower battery module 42a. Additionally, the upper part of the plate portion 52 may have a coupling hole 53b which is connected to a coupling groove 43b of the upper battery module 42b, and the lower part may have a coupling hole 53a which is connected to a coupling groove 43a of the lower battery module 42a.

As described above, in this embodiment, the coupling groove 43b of the upper battery module 42b is located at the lower part, and the coupling groove 43a of the lower battery module 42a is located at the upper part. Accordingly, the width (w) of the plate portion 52 in the up-down direction (Z axis direction) may be smaller than the height (h) of the module array 40. Through this, the side frame 50 for supporting the battery module 42 may be formed with a simpler and compact structure.

In this instance, in this embodiment, the coupling hole 53b at the upper part of the plate portion 52 may include a plurality of coupling holes 53b corresponding to the number of coupling grooves 43b of the upper battery module 42b, and each coupling hole 53b may be connected to each coupling groove 43b. Additionally, the coupling hole 53a at the lower part of the plate portion 52 may include a plurality of coupling holes 53a corresponding to the number of coupling grooves 43a of the lower battery module 42a, and each coupling hole 53a may be connected to each coupling groove 43a.

In other words, the plate portion 52 may have the coupling holes 53 in two columns corresponding to the number (two) of battery modules 42, and the coupling holes 53 may be arranged at an interval in the up-down direction. Additionally, in each column, the plurality of coupling holes 53 may be arranged at an interval in the length direction (X axis direction) of the plate portion 52. Through this, the plate portion 52 may be directly coupled to each of all the battery modules 42.

Referring to FIGS. 6 and 7, a coupler B may be coupled to the coupling groove 43 and the coupling hole 53 connected to each other. The coupler B may be coupled to the coupling groove 43 through the coupling hole 53. To this end, the coupler B may be a screw or bolt having a screw thread corresponding to the inner periphery of the coupling groove 43.

However, the type of the coupler B is not limited to the above-described type, and the coupler B may include various types of elements for coupling the side frame 50 to the battery module 42. As another example, the coupler B may include rivet- or wedge-shaped elements.

Alternatively, the coupling of the side frame 50 and the battery module 42 may be made by a part of the plate portion 52 protruded outwards to conform to the shape of the coupling groove 43 of the battery module 42.

As described above, in this embodiment, as the plate portion 52 is directly coupled to each of the battery modules 42 vertically stacked, the battery modules 42 may be supported each other through the medium of the side frame 50, and their relative position may be stably fixed.

Referring back to FIGS. 2 to 6, the side frame 50 of the battery pack 1 according to an embodiment of the present disclosure may include support portions 54, 56 extended from the plate portion 52 in the outward direction of the module array 40.

In this embodiment, the support portions 54, 56 may be supported by the support frames 20, 30. Through this, the module array 40 may be stably supported by the housing 10 through the medium of the side frame 50 and the support frames 20, 30.

In this embodiment, the support portions 54, 56 may include the upper support portion 54. The upper support portion 54 may be supported in contact with the upper edge part of the support frames 20, 30.

To this end, the upper support portion 54 may have a flange shape extended from the upper edge of the plate portion 52 in the outward direction of the module array 40. In this instance, the upper support portion 54 may have a predetermined coupling hole 55. The coupling hole 55 may be the component for coupling with the support frames 20, 30. It will be described below in conjunction with FIGS. 8 to 11.

Meanwhile, in this embodiment, the upper support portion 54 may include a plurality of upper support portions 54 arranged at an interval along the extension direction of the plate portion 52. Accordingly, the module array 40 may be supported in a balanced way along the length direction (X axis direction) by the side frame 50.

In this embodiment, the support portions 54, 56 may include the lower support portion 56. The lower support portion 56 may be supported in contact with the inner wall of the escape spaces 23, 33 of the support frames 20, 30.

To this end, the lower support portion 56 may have a flange shape extended from the lower edge of the plate portion 52 in the outward direction of the module array 40. In this instance, the lower support portion 56 may have a predetermined coupling hole 57. The coupling hole 57 may be the component for coupling with the support frames 20, 30. It will be described below in conjunction with FIGS. 8 to 11.

In this instance, the width of the lower support portion 56 may be shorter than the width of the upper support portion 54. Here, the width of the support portions 54, 56 may refer to the length of the support portions 54, 56 in the X axis direction. As the width of the escape spaces 23, 33 of the support frames 20, 30 is as small as possible, the stiffness of the support frames 20, 30 may be as high as possible.

Meanwhile, in this embodiment, the lower support portion 56 may include a plurality of lower support portions 56 arranged at an interval along the extension direction of the plate portion 52. Accordingly, the module array 40 may be supported by the side frame 50 in a balanced way along the length direction (X axis direction).

In this instance, in this embodiment, the upper support portion 54 and the lower support portion 56 may be located in a staggered manner in the up-down direction (Z axis direction). In other words, the upper support portion 54 may be located between the adjacent lower support portions 56, or the lower support portion 56 may be located between the adjacent upper support portions 54.

This may increase the assembly efficiency of the module assembly A and the support frames 20, 30. More specifically, the coupling of the side frame 50 of the module assembly A and the support frames 20, 30 may be done by a predetermined tool. For example, the predetermined tool may include a driver or an electric drill, but is not limited thereto.

In this instance, the tool may perform the coupling process on the support portions 54, 56. As in this embodiment, when the upper support portion 54 and the lower support portion 56 are arranged in the staggered manner in the up-down direction, the tool may perform the process of coupling the lower support portion 56 to the support frames 20, 30 after it moves in between the adjacent upper support portions 54. That is, interference by the upper support portion 54 may be minimized.

Through this, the assembly efficiency of the battery pack 1 may be improved. The upper support portion 54 and the lower support portion 56 may be arranged side by side in the up-down direction (Z axis direction) according to needs.

Meanwhile, referring back to FIGS. 5 and 6, the side frame 50 of the battery pack 1 according to an embodiment of the present disclosure may include a pair of side frames 50, and each of the side frames 50 may be disposed at the periphery of the module array 40.

In this instance, each of the pair of side frames 50 may be disposed at each of the two opposite sides of the module array 40. Accordingly, the module array 40 may be supported on the two sides in a balanced way by the pair of side frames 50.

In this embodiment, the module assembly A may include an intermediate plate 60. The intermediate plate 60 may be interposed between the battery module 42 vertically stacked. The intermediate plate 60 may be provided as a rectangular plate corresponding to the upper surface or the lower surface of the battery module 42.

In this embodiment, the intermediate plate 60 may perform a predetermined function. As an example, the intermediate plate 60 may perform the function of ensuring insulation between the battery modules 42 vertically stacked. To this end, the intermediate plate 60 may be made of an insulating material.

As another example, the intermediate plate 60 may perform the function of preventing thermal propagation between the battery module 42 vertically stacked. To this end, the intermediate plate 60 may be made of a heat dissipating or heat resistant material. In this instance, to further prevent thermal propagation between the battery modules 42, a heat dissipation sheet (not shown) may be added to the upper side and/or the lower side of the intermediate plate 60.

As still another example, the intermediate plate 60 may perform the function of reinforcing the structural stiffness of the battery modules 42 vertically stacked. To this end, the intermediate plate 60 may be made of metal or reinforced plastic having a predetermined stiffness.

In this instance, each of two side edge parts of the intermediate plate 60 may be coupled to the side frame 50. To this end, the plate portion 52 of the side frame 50 may have a groove into which the edge part of the intermediate plate 60 is inserted.

Through this, the pair of side frames 50 at the two sides of the module array 40 may be indirectly connected by the intermediate plate 60 to form a single rigid body. Accordingly, structural stiffness and stability of the module assembly A may be further enhanced.

Hereinafter, the support structure between the module assembly and the support frame of the battery pack according to an embodiment of the present disclosure will be described in detail.

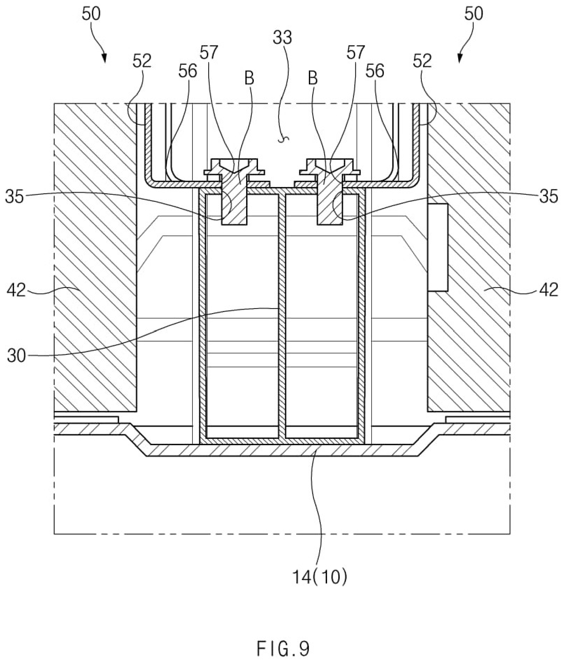

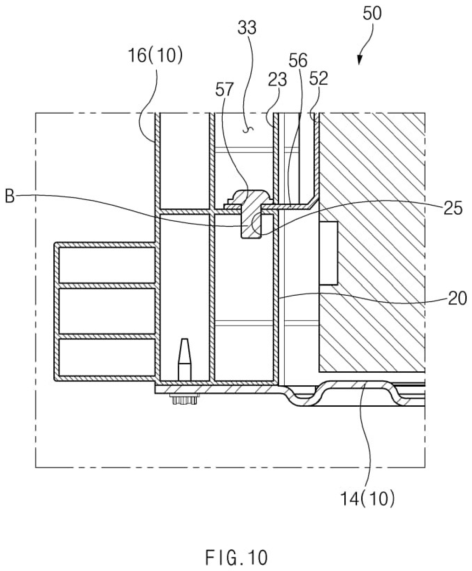

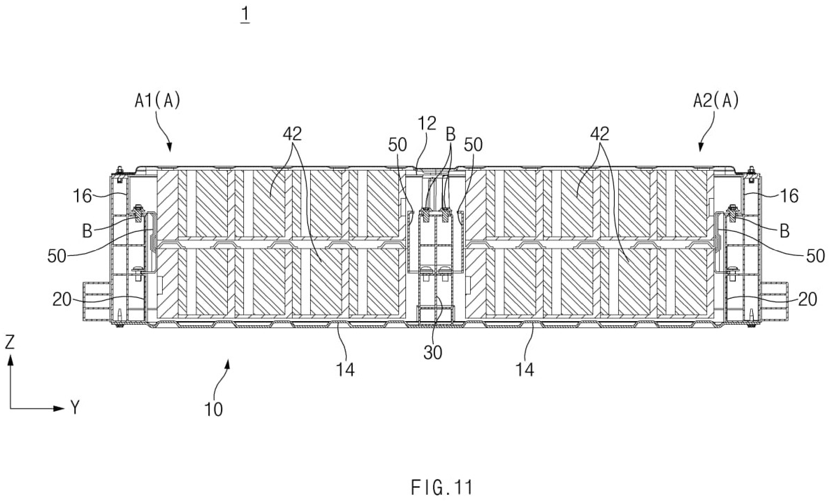

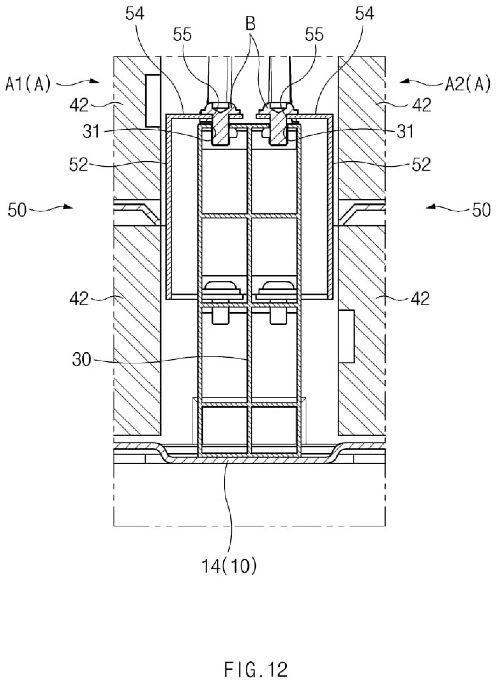

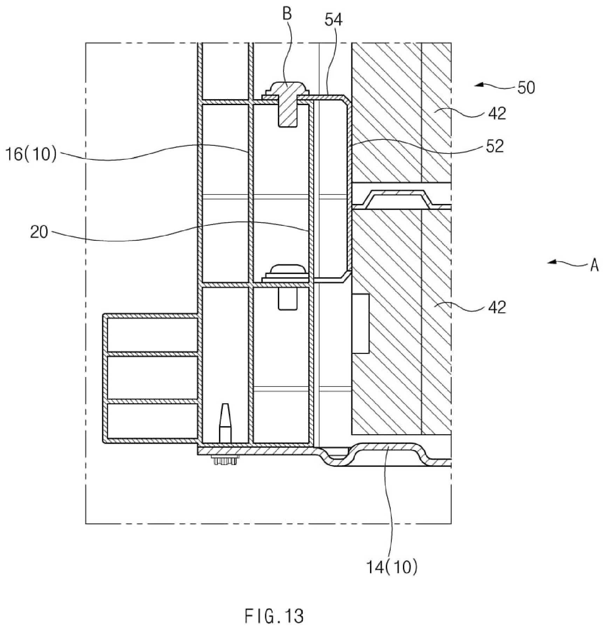

FIG. 8 is a vertical cross-sectional view of the battery pack according to an embodiment of the present disclosure, showing the coupled structure of the lower support portion of the side frame and the support frame. FIG. 9 is a partial enlarged view of FIG. 8, showing the coupled structure of the lower support portion of the side frame and the center support frame. FIG. 10 is a partial enlarged view of FIG. 8, showing the coupled structure of the lower support portion of the side frame and the side support frame. FIG. 11 is a vertical cross-sectional view of the battery pack according to an embodiment of the present disclosure, showing the coupled structure of the upper support portion of the side frame and the support frame. FIG. 12 is a partial enlarged view of FIG. 11, showing the coupled structure of the upper support portion of the side frame and the center support frame. FIG. 13 is a partial enlarged view of FIG. 11, showing the coupled structure of the upper support portion of the side frame and the side support frame.

Referring back to FIG. 2, in this embodiment, the module assembly A may include a plurality of module assemblies A. Additionally, each of the plurality of module assemblies A may be disposed in each segment of the accommodation space S divided by the center support frame 30.

As shown, the module assembly A may include two module assemblies A, and each of the module assemblies A may be disposed in the first accommodation space S1 and the second accommodation space S2. Hereinafter, the module assembly A disposed in the first accommodation space S1 is referred to as a first module assembly A1, and the module assembly A disposed in the second accommodation space S2 is referred to as a second module assembly A2.

Referring to FIGS. 8 and 11, as described above, in this embodiment, each of the pair of side frames 50 may be disposed at each of the two sides of the first module assembly A1. In this instance, among the pair of side frames 50, the side frame 50 located at the left side (the negative direction of the Y axis) may be coupled to the side support frame 20, and the side frame 50 located at the right side (the positive direction of the Y axis) may be coupled to the center support frame 30.

Likewise, each of the pair of side frames 50 may be disposed at each of the two sides of the second module assembly A2. In this instance, among the pair of side frames 50, the side frame 50 located at the left side (the negative direction of the Y axis) may be coupled to the center support frame 30, and the side frame 50 located at the right side (the positive direction of the Y axis) may be coupled to the side support frame 20.

Referring to FIGS. 8 and 9, in this embodiment, the lower support portion 56 of the side frame 50 at the right side (the positive direction of the Y axis) of the first module assembly A1 and the lower support portion 56 of the side frame 50 at the left side (the negative direction of the Y axis) of the second module assembly A2 may be supported in planar contact with the bottom side of the center escape space 33 of the center support frame 30.

In this instance, the coupling hole 57 of the lower support portion 56 may be coaxially arranged and connected to the coupling hole 35 at the bottom side of the center escape space 33. Additionally, the predetermined coupler B may be coupled to the connected coupling holes 35, 57.

Accordingly, the lower support portion 56 may be coupled to the center support frame 30. Accordingly, the module assembly A may be supported and held fixed in place by the center support frame 30 and the housing 10 through the medium of the side frame 50 more stably.

Meanwhile, the coupler B may include a screw or a bolt, but is not limited to a particular type and may include any type of element for coupling the lower support portion 56 to the center support frame 30.

Referring to FIGS. 8 and 10, in this embodiment, each of the lower support portion 56 of the side frame 50 at the left side (the negative direction of the Y axis) of the first module assembly A1 and the lower support portion 56 of the side frame 50 at the right side (the positive direction of the Y axis) of the second module assembly A2 may be supported by each of the pair of side support frames 20. In this instance, the lower support portion 56 may be supported in planar contact with the bottom side of the side escape space 23 of the side support frame 20.

In this instance, the coupling hole 57 of the lower support portion 56 may be coaxially arranged and connected to the coupling hole 25 at the bottom side of the side escape space 23. Additionally, the predetermined coupler B may be coupled to the connected coupling holes 25, 57.

Accordingly, the lower support portion 56 may be coupled to the side support frame 20. Accordingly, the module assembly A may be supported and held fixed in place by the side support frame 20 and the housing 10 through the medium of the side frame 50 more stably.

Meanwhile, the coupler B may include a screw or a bolt, but is not limited to a particular type and may include any type of element for coupling the lower support portion 56 to the side support frame 20.

In this instance, as shown in FIGS. 6 and 8 to 10, in this embodiment, as the width (w) of the plate portion 52 of the side frame 50 is as small as possible compared to the height (h) of the module array 40, the length of the escape spaces 23, 33 in the up-down direction (Z axis direction) may be as small as possible.

As an outcome, the height of the part of the support frames 20, 30 having the escape spaces 23, 33 in the up-down direction (Z axis direction) may be sufficient. Accordingly, the support frames 20, 30 may stably support the module assembly A with stronger stiffness.

Further, in this embodiment, as the upper support portion 54 of the side frame 50 is coupled to the upper edge part of the support frames 20, 30, and only the lower support portion 56 is coupled to the inner surface of the escape spaces 23, 33, it may be possible to minimize the number of escape spaces 23, 33 of the support frames 20, 30 and the volume occupied by the escape spaces 23, 33.

Through this, it may be possible to minimize the decrease in stiffness of the support frames 20, 30 caused by the formation of the escape spaces 23, 33, so the support frames 20, 30 may stably support the module assembly A with stronger stiffness.

Referring to FIGS. 11 and 12, in this embodiment, the upper support portion 54 of the side frame 50 at the right side (the positive direction of the Y axis) of the first module assembly A1 and the upper support portion 54 of the side frame 50 at the left side (the negative direction of the Y axis) of the second module assembly A2 may be supported in planar contact with the upper edge part of the center support frame 30.

In this instance, the coupling hole 55 of the upper support portion 54 may be coaxially arranged and connected to the coupling hole 31 at the upper edge part of the center support frame 30. Additionally, the predetermined coupler B may be coupled to the connected coupling holes 31, 57.

Accordingly, the upper support portion 54 may be coupled to the center support frame 30. Accordingly, the module assembly A may be supported and held fixed in place by the center support frame 30 and the housing 10 through the medium of the side frame 50 more stably.

Meanwhile, the coupler B may include a screw or a bolt, but is not limited to a particular type and may include any type of element for coupling the upper support portion 54 to the center support frame 30.

Referring to FIGS. 11 and 13, in this embodiment, each of the upper support portion 54 of the side frame 50 at the left side (the negative direction of the Y axis) of the first module assembly A1 and the upper support portion 54 of the side frame 50 at the right side (the positive direction of the Y axis) of the second module assembly A2 may be supported by each of the pair of side support frames 20. In this instance, the upper support portion 54 may be supported in planar contact with the upper edge part of the side support frame 20.

In this instance, the coupling hole 55 of the upper support portion 54 may be coaxially arranged and connected to the coupling hole 21 at the upper edge part of the side support frame 20. Additionally, the predetermined coupler B may be coupled to the connected coupling holes 21, 57.

Accordingly, the upper support portion 54 may be coupled to the side support frame 20. Accordingly, the module assembly A may be supported and held fixed in place by the side support frame 20 and the housing 10 through the medium of the side frame 50 more stably.

Meanwhile, the coupler B may include a screw or a bolt, but is not limited to a particular type and may include any type of element for coupling the upper support portion 54 to the side support frame 20.

As described above, in the battery pack 1 according to an embodiment of the present disclosure, as the side frame 50 is coupled to each of the battery modules 42 vertically stacked, the relative position of the battery modules 42 may be fixed and the battery modules 42 may be supported each other.

Further, in this embodiment, as the support portions 54, 56 of the side frame 50 are configured to be supported by the support frames 20, 30 connected or coupled to the housing 10, the battery modules 42 vertically stacked may be stably supported by the housing 10 through the medium of the side frame 50.

Although the present disclosure has been hereinabove described with regard to a limited number of embodiments and drawings, the present disclosure is not limited thereto, and may be embodied in different forms by persons having ordinary skill in the technical field pertaining to the present disclosure within the technical aspect of the present disclosure and the appended claims and their equivalent scope.

### [List of Reference Numerals]

1: Battery pack
10: Housing
20: Side support frame
30: Center support frame
A: Module assembly
40: Module array
50: Side frame
60: Intermediate plate
B: Coupler

## Claims

1. A battery pack comprising:
a housing having an accommodation space; and
a module assembly disposed in the accommodation space,
wherein the module assembly includes:
a module array including a plurality of stacked battery modules; and
a side frame including a plate portion disposed at a side of the module array and coupled to each of the plurality of battery modules and a support portion extended from the plate portion in an outward direction of the module array and supported by the housing.

2. The battery pack according to claim 1,
wherein a side of the battery module has a coupling groove recessed inwards,
wherein the plate portion has a plurality of coupling holes, each coupling hole connected to each of the coupling grooves of the plurality of battery modules, and
wherein the module array and the side frame are coupled by a coupler inserted into the coupling hole and the coupling groove.

3. The battery pack according to claim 2,
wherein the coupling groove includes the plurality of coupling grooves arranged at an interval along a length direction of the battery module, and
wherein the plate portion is extended along the length direction of the battery module.

4. The battery pack according to claim 1,
wherein a width of the plate portion in an up-down direction is smaller than a height of the module array.

5. The battery pack according to claim 1,
wherein the support portion includes a plurality of support portions arranged at an interval along a length direction of the battery module.

6. The battery pack according to claim 1,
wherein the support portion has a coupling hole through which a predetermined coupler is coupled.

7. The battery pack according to claim 1,
wherein the support portion includes:
an upper support portion at an upper edge of the plate portion; and
a lower support portion at a lower edge of the side plate.

8. The battery pack according to claim 7,
wherein the upper support portion and the lower support portion are arranged in a staggered manner in an up-down direction.

9. The battery pack according to claim 7, further comprising:
a center support frame configured to divide the accommodation space, a side of the center support frame being supported by an inner wall of the housing,
wherein the support portion is coupled to the center support frame.

10. The battery pack according to claim 9,
wherein the center support frame has a plate shape extended parallel to the plate portion, and
wherein the upper support portion is coupled to an upper edge part of the center support frame.

11. The battery pack according to claim 9,
wherein the center support frame has a center escape space of which at least one side is open, and
wherein the lower support portion is coupled to an inner wall of the center escape space.

12. The battery pack according to claim 7, further comprising:
a side support frame extended along a periphery of the accommodation space, a side of the side support frame being supported by an inner wall of the housing,
wherein the support portion is coupled to the side support frame.

13. The battery pack according to claim 12,
wherein the side support frame has a plate shape extended parallel to the plate portion, and
wherein the upper support portion is coupled to an upper edge part of the side support frame.

14. The battery pack according to claim 13,
wherein a side of the side support frame contacts the inner wall of the housing.

15. The battery pack according to claim 12,
wherein the side support frame has a side escape space of which at least one side is open, and
wherein the lower support portion is coupled to an inner wall of the side escape space.

16. The battery pack according to claim 1,
wherein the side frame includes a pair of side frames, each side frame disposed at each of two opposite sides of the module array.

17. The battery pack according to claim 16, further comprising:
a center support frame configured to divide the accommodation space, a side of the center support frame being supported by an inner wall of the housing; and
a side support frame extended along a periphery of the accommodation space, a side of the side support frame being supported by the inner wall of the housing,
wherein any one of the pair of side frames is coupled to any one of the center support frame and the side support frame, and
wherein the other of the pair of side frames is coupled to the other of the center support frame and the side support frame.

18. The battery pack according to claim 17,
wherein the side support frame includes a pair of side support frames extended parallel to each other at two sides of the accommodation space,
wherein the center support frame is extended between the pair of side support frames in parallel to the pair of side support frames to divide the accommodation space into a first accommodation space and a second accommodation space, and
wherein the module assembly includes:
a first module assembly disposed in the first accommodation space; and
a second module assembly disposed in the second accommodation space.
